(19) **Europäisches Patentamt**

**European Patent Office**

**Office européen des brevets**

(11) **EP 1 344 803 A1**

(12) **EUROPEAN PATENT APPLICATION**

(43) Date of publication:
17.09.2003 Bulletin 2003/38

(51) Int Cl.⁷: **C09D 11/00**

(21) Application number: 03251272.5

(22) Date of filing: 04.03.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **12.03.2002 US 363422 P**

(71) Applicant: **ROHM AND HAAS COMPANY**
**Philadelphia, Pennsylvania 19106-2399 (US)**

(72) Inventors:
• **Chung, Chao-Jen**
**Norht Wales., Pennsylvania 19454 (US)**

• **Finley, Maureen Joanne**
**Churchville., Pennsylvania 18966 (US)**
• **Fu, Zhenwen**
**Lansdale., Pennsylvania 19446 (US)**
• **Lein, George Max**
**Chalfont.,Pennsylvania 18914 (US)**

(74) Representative: **Kent, Venetia Katherine**
**Rohm and Haas (UK) Ltd**
**European Operations Patent Dept.**
**Lennig House**
**2 Mason's Avenue**
**Croydon, CR9 3NB (GB)**

(54) **Heat resistant non-pigmented inks**

(57)     A non-pigmented heat resistant ink composition suitable for use in ink jet printing is provided made up of cross-linked hollow micro-sphere particles. The remainder of the ink composition comprises a suitable carrier vehicle, which typically contains water, alcohols, surfactants, humectants and optionally a resin component.

EP 1 344 803 A1

## Description

This invention relates to a heat resistant non-pigmented ink. More specifically, this invention relates to an ink jet ink having cross-linked hollow micro-spheres that are stable at high temperatures.

Ink jet printing is a well established technique for applying an ink to a substrate to form an image, in which there is no physical contact between the functional part of the printer from which the ink is applied and the substrate onto which the ink is deposited. The ink is applied in the form of micro-droplets, which are projected by well known means through small nozzles in the print head onto the substrate.

Inks useful for ink jet printing typically comprise a colorant, an optional resin component, a carrier fluid and various additives. The colorant may be pigment based or dye based. The resin component is used to fix the colorant on the substrate and improve properties, such as water resistance. The carrier fluid may be water, a solvent or a mixture of water and a miscible solvent. Additives are incorporated into the ink jet ink to confer certain performance properties. Such additives may include humectants to reduce the rate of drying of the ink at the nozzle tip; surfactants to control the surface tension and degree of wet out of the ink within the nozzle, on the nozzle plate, and on the substrate; volatile alcohols to speed the drying of the ink on the substrate; bases such as ammonia, fixed bases or organic amines to control pH and other additives as may be needed to provide good jettability performance in a given printer.

Pigments are desirable as colorants because of their light-fastness and waterfastness properties. Pigments are also more readily retained on the surface of porous substrates compared to soluble dyes. Soluble dyes are prone to be carried into the interior of porous substrates through the wicking action of the liquid and thereby suffer from reduced color intensity.

While colored inks containing various organic pigments are in widespread use in ink jet printing, there are very few white inks available. The primary reason is that the majority of white pigments are inorganic in nature, such as titanium dioxide, and have a specific gravity substantially greater than that of water. Therefore, in the dilute, low viscosity water medium of the ink required for ink jet inks, such inorganic pigments quickly settle out of the ink, and give rise to low and variable intensity on the printed image, and cause plugging of the nozzles in the ink jet print head.

US Patent No. 4,880,465 discloses the use of hollow micro-spheres in white ink jet inks. Such micro-spheres are sub-micron sized polymeric spheres with a central cavity within each particle. When these particles are present in the liquid ink, the center cavity is filled with water. After the ink has been jetted onto a substrate, the water evaporates out of the center cavity, and leaves a void filled with air. The size of this void is designed to effectively scatter visible light, so that the image produced appears white.

The use of hollow micro-spheres greatly alleviates the settling problems associated with inorganic pigments, because the hollow micro-spheres have a specific gravity close to that of water. Consequently, the uniformity of the white image, long term jettability, stability of the ink within the cartridge and the shelf life of the ink are all improved.

It is also well known in the theory of light scattering that the size of the scattering site has an influence on the wavelength of the light that is scattered. In the case of hollow micro-spheres, the center cavity or void is the scattering site. Within the scale of sizes relevant to the present subject of inks, the useful range of center void diameter is about 0.2 microns to about 1.5 micron. Smaller scattering sites preferentially scatter shorter wavelengths compared to larger scattering sites, which preferentially scatter longer wavelengths. Consequently, hollow micro-spheres with a cavity size at the smaller end of this range scatter short wavelengths preferentially, which thereby produce a white image with a bluish tint. Cavity sizes in the larger end of the useful range preferentially scatter wavelengths near the center of the visible spectrum, such that the obtained image is a more pure white.

White inks are useful for printing on many substrates, including textiles; colored paper; colored plastic sheets, bags, and bottles; transparent plastic sheets, bags, and bottles; corrugated cardboard; and so forth. The ability to impart heat resistant properties to inks comprising hollow micro-spheres is an important feature in many applications using white ink. For example, printing on textile substrates requires that the inks be resistant to heat such as the heat from an iron.

Many hollow micro-sphere particles soften and collapse upon the application of heat. Once collapsed, the white image disappears as if nothing was imparted onto the surface of the substrate.

Japanese laid-open patent application (kokai) No. 2001-131451 to Hitachi Maxell, Ltd. attempts to provide a solvent and heat resistant hollow micro-sphere white ink by providing that at least 60% of the hollow micro-sphere components be insoluble in methyl isobutyl ketone, with 80% or higher being even better. Japanese laid-open patent application (kokai) No. 2001-131450 to Hitachi Maxell, Ltd. attempts to provide a solvent and heat resistant hollow micro-sphere white ink by providing that at least 60% of the hollow micro-sphere components be insoluble in methyl ethyl ketone, with 80% or higher being even better. The solvent resistance and heat resistance of the print decreases if the proportion is less than 60%, but these characteristics can be improved by raising the proportion to at least 60%.

The problem addressed by the present invention is to provide improved heat resistant hollow micro-sphere ink compositions wherein the heat resistance is determined by cross-linking without being limited to solubility requirements of the hollow micro-sphere.

The present invention provides a non-pigmented ink comprising a carrier liquid and hollow micro-sphere polymer particles having a particle size of between 0.2 to 1.5 micron, characterized in that said hollow micro-sphere polymer particles are cross-linked and the ink exhibits heat resistance. The present invention further provides a method of ink jet ink printing, comprising: (a) providing a substrate; and (b) imparting micro-droplets of an ink composition onto said substrate wherein said ink composition comprises a carrier liquid and hollow micro-sphere polymer particles having a particle size of between 0.2 to 1.5 micron, characterized in that said hollow micro-sphere polymer particles are cross-linked and the ink exhibits heat resistance.

The present invention further provides a method of controlling the level of heat resistance of an ink, comprising: (a) preparing hollow micro-sphere polymer particles having a particle size of between 0.2 to 1.5 micron from polymerization of at least one monomer in the presence of a cross-linking composition; (b) adjusting the level of the cross-linking composition so that the hollow micro-sphere polymer particles are cross-linked at a level of at least 2 mole percent based on total mole of monomer used in the particle; and (c) preparing an ink composition comprising a carrier liquid and the cross-linked hollow micro-sphere polymer particles.

Surprisingly, cross-linking the polymers in the shells of the hollow micro-sphere particles provides particles with high heat resistance without being limited to solubility requirements of the hollow micro-sphere. The degree of cross-linking may be adjusted to control the level of heat resistance, so that greater cross-linking results in higher heat resistance, *i.e.* stable inks at higher temperatures.

A non-pigmented ink composition suitable for use in ink jet printing is provided made up of a cross-linked hollow micro-spheres that are stable at high temperatures. The remainder of the ink composition comprises a suitable carrier vehicle, which typically contains water, alcohols, surfactants, humectants and optionally a resin component. Once the ink is deposited onto a substrate and the carrier vehicle is removed, a film of polymeric material remains on the substrate. This film is heat resistant and the term "heat resistant ink" (or variations of this term) as used herein means an ink which will provide a heat resistant film upon removal of the carrier vehicle.

The hollow micro-spheres described herein may be made by emulsion polymerization according to various procedures known in the art, including, without limitation, those described in US Patent Nos. 5229209, 4594363, 4427836 or 4089800, or as described in the Journal of Polymer Science - Part A, volume 39, pages 1435-1449 (2001), published by John Wiley and Sons, Inc. The means by which the cavity size is designed is described therein. The hollow micro-spheres produced therein contain surfactants according to conventional emulsion polymerization techniques, and are stable systems which, if synthesized according to good practice or filtered following completion of the synthesis procedure, consist of micro-sphere particles dispersed individually in the water medium. These products, therefore, do not require milling, grinding or other means to promote dispersion that are conventionally applied to organic pigments used in ink jet formulations.

Cross-linking of the hollow micro-spheres provides stability at high temperatures. The cross-linking level is from at least 2 mole percent, preferably from at least 5%, based on total mole of monomer used in the particle. For particles based on multi-stage polymerization, it is preferable that cross-linking take place predominantly in the "outermost" shell of the particle.

Crosslinking in the shell can be derived from the use of one or more of the polyethylenically unsaturated monomers. Suitable polyethylenically unsaturated crosslinkers include, for example, di(meth)acrylates, tri(meth)acrylates, tetra(meth)acrylates, polyallylic monomers, polyvinylic monomers and (meth)acrylic monomers having mixed ethylenic functionality.

Another route useful to cross-link the shell portion of the polymers is based on the use of one or more multifunctional monomers (MFM) to provide post-polymerization cross-linking and reinforcement of the sheath. The MFM comprise at least one functional group capable of vinyl copolymerization and at least one functional group capable of reaction with suitable reactive molecules.

A shell polymer based on MFM as described above may be reacted with reactive molecules selected from amines, diamines, amino acids and aminoalkyltrialkoxysilanes; optionally followed by the addition of other reactive molecules: aldehydes (such as formaldehyde), dialdehydes (such as glutaric dialdehyde), hydrazides and dihydrazides (such as succinic dihydrazide) to form post-polymerization cross-linked sol-gels.

Examples of suitable functional groups and reactive molecules for post-polymerization cross-linking of the polymer sheath as well as MFMs suitable for post-polymerization cross-linking are illustrated, without limitation, in European Patent Application EP 1092421. Moreover, EP 1092421 illustrates, without limitation, di(meth)acrylates, tri(meth)acrylates, tetra(meth)acrylates, polyallylic monomers, polyvinylic monomers, and (meth)acrylic monomers having mixed ethylenic functionality that are useful as cross-linkers in the present invention.

Hollow micro-spheres may be polymerized using a variety of vinyl monomers as described in the above references. Examples of nonionic monoethylenically unsaturated monomers include styrene, vinyltoluene, ethylene, vinyl acetate, vinyl chloride, vinylidene chloride, acrylonitrile, (meth)acrylamide, various ($C_1$ -$C_{20}$) alkyl or ($C_3$ -$C_{20}$) alkenyl esters of (meth)acrylic acid, including methyl acrylate (MA), methyl methacrylate (MMA), ethyl acrylate (EA) and butyl acrylate (BA). The expression (meth)acrylic acid is intended to serve as a generic expression embracing both acrylic acid and methacrylic acid, and may be used with acrylic esters as, for example, methyl methacrylate (MMA), methyl acrylate (MA) ethyl (meth)acrylate (EMA), butyl (meth)acrylate (BMA), 2-hydroxyethyl methacrylate (HEMA), 2-ethylhexyl (meth)acrylate (EHMA), benzyl (meth)acrylate, lauryl (meth)acrylate, oleyl (meth)acrylate, palmityl (meth)acrylate, and stearyl (meth)acrylate.

Typically acrylic esters such as MMA, EA, BA and styrene are preferred monomers to polymerize and form the shell of the micro-spheres. Difunctional vinyl monomers, such as divinyl benzene, allyl methacrylate, ethylene glycol dimethacrylate, 1,3-butane-diol dimethacrylate, diethylene glycol dimethacrylate, trimethylol propane trimethacrylate, and the like, may also be copolymerized to form a crosslinked outer shell. These compositions of the hollow micro-spheres represent conventional embodiments of this class of material, but the invention described herein is not limited to these compositions.

The glass transition temperature ("Tg") of the polymeric particles is typically from -50°C to 150 °C, the monomers and amounts of the monomers selected to achieve the desired polymer Tg range being well known in the art. Typical Tg values for hollow micro-spheres are greater than 70 °C. "Glass transition temperature" or "Tg" as used herein, means the temperature at or above which a glassy polymer will undergo segmental motion of the polymer chain. Glass transition temperatures of a polymer can be estimated by the Fox equation [Bulletin of the American Physical Society 1, 3, page 123 (1956)] as follows: $\frac{1}{T_g} = \frac{w_1}{T_{g(1)}} + \frac{w_2}{T_{g(2)}}$

For a copolymer of monomers $M_1$ and $M_2$, $w_1$ and $w_2$ refer to the weight fraction of the two co-monomers, and $T_{g(1)}$ and $T_{g(2)}$ refer to the glass transition temperatures of the two corresponding homopolymers in degrees Kelvin. For polymers containing three or more monomers, additional terms are added ($w_n/T_{g(n)}$). The Tg of a polymer can also be measured by various techniques including, for example, differential scanning calorimetry ("DSC"). The particular values of $T_g$ reported herein are calculated based on the Fox equation. The glass transition temperatures of homopolymers may be found, for example, in "Polymer Handbook", edited by J. Brandrup and E.H. Immergut, Interscience Publishers.

Particle size is measured by either the UPA150 bench type particle size analyzer made by Microtrac Inc., 148 Keystone Drive, Montgomeryville, PA 18936, USA or the BI-90 particle size analyzer made by Brookhaven Instruments Corporation, 750 Blue Point Rd., Holtsville, NY 11742, USA.

Inks of the present invention comprising cross-linked hollow micro-spheres may be formulated by simple blending in a conventional low shear mixing apparatus. Other well known mixing techniques or ink formulating techniques may be employed to prepare inks of the present invention. Such inks may comprise up to sixty percent (60%) by weight of the cross-linked hollow micro-spheres.

As described above, additives may be incorporated into the ink jet ink to confer certain performance properties. Typical humectants that may be incorporated in inks of the present invention include, without limitation, ethylene glycol, diethylene glycol, propylene glycol, N-methyl-2-pyrrolidone, and any other known humectant. Typical anionic surfactants that may be incorporated in inks of the present invention include, without limitation, sulfates, sulfonates, carboxylates, phosphates and any other known surfactant. Typical non-ionic surfactants that may be incorporated in inks of the present invention include, without limitation, alkyl phenyl polyethylene oxides, alkyl polyethylene oxides, polyethylene oxide esters, polyethylene oxide adducts of acetylene glycol and any other known surfactant. Typical bases that may be incorporated in inks of the present invention include, without limitation, ammonia; fixed bases such as NaOH, KOH, LiOH; amines such as diethanol amine, triethanolamine and any other known base to control pH.

Resins, including, without limitation, thermoplastic and crosslinkable resins, may be incorporated into the ink jet ink to provide binding capability in the dried ink film. The binding of hollow micro-spheres in the dried ink will lead to improved water and smear resistance. The resins may be water-dispersed polymers, such as may be produced by conventional emulsion polymerization, or water-soluble resins. Useful resin components include, without limitation, copolymers of acrylic acid esters or methacrylic acid esters, copolymers of styrene and acrylic or methacrylic acid esters, copolymers of styrene and acrylic acid, styrene-butadiene copolymers, copolymers of vinyl acetate with other acrylic or methacrylic acid esters, and the like.

Inks of the present invention may be applied to any known substrate, including, without limitation, paper, paperboard, textiles, natural and synthetic substrates, plastics, glass and ceramics. Inks of the present invention may be applied by any known type of printing device including without limitation thermal ink jets, piezoelectric ink jets, continuous ink jets, roller applications and spray applications.

The invention in some of its embodiments will now be further described by reference to the following examples:

**Example 1: Ink Preparation**

Ink compositions F1-F5 are formulated by combining the ingredients shown in Table 1 below. Units are expressed as a weight percentage of the ingredient in the final ink formulation.

Table 1.

| Ink formulations of voided particle pigments. | | | | | |
|---|---|---|---|---|---|
| ID | F1 | F2 | F3 | F4 | F5 |
| xHSP1 | 47.27 | - | - | - | - |
| xHSP2 | - | 50.98 | - | - | - |
| Ropaque OP-96 | - | - | 43.33 | - | - |
| Ropaque Ultra | - | - | - | 43.33 | - |
| Ropaque HP-91 | - | - | - | - | 25.45 |
| Binder | 15.48 | 15.48 | 15.48 | 15.48 | 8.33 |
| NMP | 6.50 | 6.50 | 6.50 | 6.50 | 6.50 |
| PEG-600 | 3.00 | 3.00 | 3.00 | 3.00 | 3.00 |
| PPD | 10.20 | 10.20 | 10.20 | 10.20 | 10.20 |
| DI water | 17.55 | 13.84 | 21.49 | 21.49 | 46.52 |
| Total | 100.00 | 100.00 | 100.00 | 100.00 | 100.00 |

xHSP1 is a hollow micro-sphere cross-linked polymer particle with 27.5% solid made according to the polymer #34 in European Patent Application Number 1 092 421 A2, and xHSP2 is a hollow micro-sphere cross-linked polymer particle with 25.5% solid made by the same process except with a larger (300nm) poly (MMA/MAA) core. Ropaque OP-96, Ultra and HP-91 are available from Rohm and Haas Company. NMP is 1-methyl-2-pyrrolidinone and is available from Acros Organics, New Jersey, U.S.A. PEG-600 is polyethylene glycol, molecular weight 600, available from Fisher Scientific. PPD is 1,3-propanediol, available from Acros Organics, New Jersey, U.S.A.

The binder is prepared by the following procedure: A 5-liter round-bottomed flask is equipped with paddle stirrer, thermometer, nitrogen inlet and reflux condenser. To 814.5g. of deionized water heated to 75°C in the flask under a nitrogen atmosphere with stirring there is added 10.5 g. of 0.1% $FeSO_4 \cdot 7H_2O$ followed by 105 g. of monomer emulsion. The monomer emulsion is prepared from 420 g. of deionized water, 150 g. of Triton X-405 (available from Dow Corning, USA), 538.8 g. of butyl acrylate, 799.8 g. of ethyl acrylate, 73.65 g. of acrylonitrile, 87.75 g. of n-methylolacrylamide (48%) and 13.27 g. of acrylamide dissolved in 13.27 g. of deionized water. Three quarter grams of ammonium persulfate dissolved in 22.5 g. of water is added to the flask and then 0.6 g. of sodium bisulfite and 0.15 g. of sodium hydrosulfite dissolved in 22.5 g. of water. Two minutes later, the remaining monomer emulsion with addition of 15 g. itaconic acid dissolved in 300 g. of water is added to the kettle over a 90 minute period at 73°C. During the feed time, 6.75 g. of ammonium persulfate dissolved in 75 g. of water and 6.75 g. of sodium bisulfite dissolved in 75 g. of water are also added to the kettle. Thirty minutes after the monomer addition, 4.28 g. of t-butyl hydroperoxide (70%) dissolved in 48.25 g. of water and 2.145 g. of sodium formaldehyde sulfoxylate dissolved in 55.5 g. of water are added to the kettle over a 15 minute period. Thirty minutes after the addition, 4.28 g. of t-butyl hydroperoxide (70%) dissolved in 48.25 g. of water and 2.92 g. of isoascorbic acid dissolved in 55.5 g. of water are added to the kettle over a 30 minute period. The dispersion is then neutralized with 3.0 g. of 14% ammonia at a temperature below 45°C.

The properties of inks F1 to F5 are presented in Table 2.

Table 2.

| Ink properties. | | | |
|---|---|---|---|
| ID | PH | Surface Tension (dyne/cm) | Viscosity (cp) |
| F1 | 8.60 | 41.1 | 6.31 |
| F2 | 8.54 | 39.4 | 6.41 |
| F3 | 8.55 | 42.9 | 6.66 |
| F4 | 8.76 | 41.5 | 6.81 |
| F5 | 8.65 | 39.1 | 8.40 |

**Example 2: Substrate Printing and Color Measurement**

Ink compositions prepared according to Example 1 are applied to fabric using an Epson 3000 printer. Five passes through the printer are used to provide an applied wet coating weight of 5.0 - 6.0 grams/ft$^2$. After printing, the initial whiteness (L value, as described below) is measured and some samples are left to cure at various temperatures and various lengths of time. One sample is ironed after the initial whiteness measurement. Ironing is done using a Quick 'N Easy™ iron with automatic shut-off, Model 470, made by Black & Decker Household Products, Inc. The iron is set to its highest setting 7, maintaining an estimated temperature of about 180°C and the iron contacts the printed substrate surface for about 10 seconds.

L a b values are measured with a ColorQUEST™ CQ Sphere spectrometer, made by HunterLab, using the C light and a 2 degree measurement angle. The L value is relative measure of the degree of whiteness/blackness on a scale from 0-100 (0=black, 100=white). The a values indicate degree of redness/greenness. A positive a value indicates increasing redness. The b values are an indication of yellowness/blueness. A positive b value indicates increasing yellowness.

Table 3 presents results of printing ink compositions F1-F5 on a black 100% cotton fabric tee shirt by Gildan, available at Bodek and Rhodes Printable Tee Shirts and Sportswear since 1939 in Philadelphia, Pennsylvania, USA.

Table 3.

| ID | Hollow micro-sphere | Initial L | After Ironing L | 3 min cure @ 110°C L | 3 min cure @ 150°C L | 3 min cure @ 195°C L | 24 hr cure @ 180°C L |
|---|---|---|---|---|---|---|---|
| F1 | xHSP1 | 56.40 | 54.28 | 56.29 | 55.44 | 51.75 | 50.58 |
| F2 | xHSP2 | 68.29 | 64.94 | 65.82 | 65.51 | 65.11 | 63.73 |
| F3 | **Ropaque OP-96** | 66.51 | 24.37 | 49.66 | 23.14 | - | 18.26 |
| F4 | **Ropaque Ultra** | 71.42 | 24.03 | 28.81 | 21.85 | - | 18.04 |
| F5 | **Ropaque HP-91** | 38.67 | 14.71 | - | 14.95 | - | - |

L (Whiteness) values of printed samples on 100% cotton.

Table 4 presents results of insoluble fraction of xHSP1, Ropaque Ultra and Ropaque HP-91 in methyl ethyl ketone (MEK) and methyl isobutyl ketone (MiBK). The mole percent cross-linker used in preparing the hollow micro-spheres is equal to mole of cross-linker/(mole of cross-linker + mole of other monomer). The insoluble fraction of the hollow micro-spheres are measured by dissolving dried xHSP1, HP-91 or Ultra (~0.3g) in 15 g solvent; shaking for 7 hours; centrifuging at 18,500 rpm for 30 minutes at 4°C and determining the weight of insoluble.

Table 4.

| Hollow microsphere | Mole % of cross-linker | Insoluble fraction in MEK | Insoluble fraction in MiBK |
|---|---|---|---|
| **xHSP1** | 17% | 96.7% | 95.7% |
| **Ropaque Ultra** | < 2% | 52.2% | 49.7% |
| **Ropaque HP-91** | < 2% | 95.5% | 95.7% |

Insoluble fraction of hollow micro spheres.

Table 3 results show that printed sample of inks F1 and F2 made from xHSP1 and xHSP2 according to this invention can withstand ironing without losing whiteness. F1 and F2 also retained most of its whiteness after cure at various temperatures and time. However, printed sample of inks F3 - F5 made from Ropaque OP-96, Ropaque Ultra and Ropaque HP-91 respectively, lost most of its whiteness after ironing or curing at various temperatures and time. Heat resistance is not due to solubility. Table 4 results indicate that Ropaque HP-91 did not have good heat resistance despite having an insoluble fraction as high as xHSP1.

**Claims**

1. A non-pigmented ink comprising a carrier liquid and hollow micro-sphere polymer particles having a particle size of between 0.2 to 1.5 micron, **characterized in that** said hollow micro-sphere polymer particles are cross-linked and the ink exhibits heat resistance.

2. The ink of Claim 1 wherein said hollow micro-sphere polymer particles are cross-linked at a level of from at least 2 mole percent based on total mole of monomer used in the particle.

3. The ink of Claim 1 wherein after printing on a black textile substrate, retains at least 50% of its initial "L" value after ironing.

4. The ink of Claim 1 wherein after printing on a black textile substrate, retains at least 50% of its initial "L" value after curing for 3 minutes at 150°C.

5. The ink of Claim 1 wherein said hollow micro-sphere polymer particles are cross-linked at a level of at least 5 mole percent and wherein after printing on a black textile substrate, retains at least 50% of its initial "L" value after curing for 3 minutes at 150°C.

6. The ink of Claim 1 wherein the carrier liquid comprises water, an alcohol, a surfactant, a humectant and an optional resin.

7. The ink of Claim 1 wherein the ink composition is suitable for use in ink jet printing.

8. A method of ink jet ink printing, comprising:

   (a) providing a substrate;
   (b) imparting micro-droplets of an ink composition onto said substrate wherein said ink composition comprises a carrier liquid and hollow micro-sphere polymer particles having a particle size of between 0.2 to 1.5 micron, **characterized in that** said hollow micro-sphere polymer particles are cross-linked and the ink exhibits heat resistance.

9. A method of controlling the level of heat resistance of an ink, comprising:

   (a) preparing hollow micro-sphere polymer particles having a particle size of between 0.2 to 1.5 micron from polymerization of at least one monomer in the presence of a cross-linking composition;
   (b) adjusting the level of the cross-linking composition so that the hollow micro-sphere polymer particles are cross-linked at a level of at least 2 mole percent based on total mole of monomer used in the particle; and
   (c) preparing an ink composition comprising a carrier liquid and the cross-linked hollow micro-sphere polymer particles.

10. A heat resistant ink produced according to the method of claim 9.

## EUROPEAN SEARCH REPORT

**European Patent Office**

Application Number

EP 03 25 1272

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | US 4 880 465 A (LORIA ADRIAN ET AL) 14 November 1989 (1989-11-14) *abstract* * column 3, line 53 - column 5, line 15; claims 1-5,12,13; examples 2-4 * | 1,6-8 | C09D11/00 |
| D,X | DATABASE WPI Section Ch, Week 200141 Derwent Publications Ltd., London, GB; Class A14, AN 2001-387267 XP002246582 -& JP 2001 131450 A (HITACHI MAXELL KK), 15 May 2001 (2001-05-15) * abstract * * paragraphs [0005],[0010],[0013],[0015]; claims 1-8 * | 1-5,7-10 | |
| D,X | DATABASE WPI Section Ch, Week 200141 Derwent Publications Ltd., London, GB; Class A18, AN 2001-387268 XP002246583 -& JP 2001 131451 A (HITACHI MAXELL KK), 15 May 2001 (2001-05-15) * abstract * * paragraphs [0005],[0010],[0012]-[0018],[0043]-[0047], [0051]; claims 1-8 * | 1-5,7-10 | TECHNICAL FIELDS SEARCHED (Int.Cl.7) C09D |
| D,X | EP 1 092 421 A (ROHM & HAAS) 18 April 2001 (2001-04-18) *abstract* * paragraphs [0016],[0037],[0051],[0052],[0056]; examples 1,2 * | 1,2,9,10 | |

-/--

The present search report has been drawn up for all claims

| Place of search | Date of completion of the search | Examiner |
|---|---|---|
| MUNICH | 7 July 2003 | Meiners, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 03 25 1272

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DATABASE WPI<br>Section Ch, Week 199325<br>Derwent Publications Ltd., London, GB;<br>Class A18, AN 1993-200535<br>XP002246584<br>-& JP 05 125127 A (JAPAN SYNTHETIC RUBBER CO LTD), 21 May 1993 (1993-05-21)<br>* abstract *<br>* paragraphs [0042]-[0045],[0075] *<br>--- | 1,2,9,10 | |
| X | US 4 908 271 A (KASAI KIYOSHI  ET AL)<br>13 March 1990 (1990-03-13)<br>*abstract*<br>*examples*<br>* claims 1-3 *<br>--- | 1,2,9,10 | |
| X | US 4 007 141 A (WISMER MARCO ET AL)<br>8 February 1977 (1977-02-08)<br>*abstract*<br>* column 2, line 15 - column 10, line 45 *<br>----- | 1,2,9,10 | TECHNICAL FIELDS SEARCHED (Int.Cl.7) |

The present search report has been drawn up for all claims

| Place of search | Date of completion of the search | Examiner |
|---|---|---|
| MUNICH | 7 July 2003 | Meiners, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 25 1272

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2003

| Patent document cited in search report | | Publication date | Patent family member(s) | | Publication date |
|---|---|---|---|---|---|
| US 4880465 | A | 14-11-1989 | CA | 1313281 C | 26-01-1993 |
| | | | EP | 0286219 A2 | 12-10-1988 |
| | | | JP | 2619677 B2 | 11-06-1997 |
| | | | JP | 63254176 A | 20-10-1988 |
| JP 2001131450 | A | 15-05-2001 | NONE | | |
| JP 2001131451 | A | 15-05-2001 | NONE | | |
| EP 1092421 | A | 18-04-2001 | AU | 6242700 A | 26-04-2001 |
| | | | BR | 0004833 A | 19-06-2001 |
| | | | CA | 2322345 A1 | 14-04-2001 |
| | | | CN | 1293032 A | 02-05-2001 |
| | | | EP | 1092421 A2 | 18-04-2001 |
| | | | JP | 2001172463 A | 26-06-2001 |
| | | | US | 6384104 B1 | 07-05-2002 |
| JP 5125127 | A | 21-05-1993 | JP | 1786888 C | 10-09-1993 |
| | | | JP | 4068324 B | 02-11-1992 |
| | | | JP | 62127336 A | 09-06-1987 |
| US 4908271 | A | 13-03-1990 | JP | 1829402 C | 15-03-1994 |
| | | | JP | 61087734 A | 06-05-1986 |
| | | | AT | 57106 T | 15-10-1990 |
| | | | CA | 1271096 A1 | 03-07-1990 |
| | | | DE | 3580031 D1 | 08-11-1990 |
| | | | EP | 0198089 A1 | 22-10-1986 |
| | | | WO | 8602017 A1 | 10-04-1986 |
| | | | US | 4798691 A | 17-01-1989 |
| US 4007141 | A | 08-02-1977 | DE | 1769194 A1 | 28-10-1971 |
| | | | FR | 1581511 A | 19-09-1969 |
| | | | GB | 1192492 A | 20-05-1970 |
| | | | US | 4572869 A | 25-02-1986 |

EPO FORM P0459

For more details about this annex : see Official Journal of the European Patent Office, No. 12/82